Europäisches Patentamt

European Patent Office

Office européen des brevets

(19)

(11) Veröffentlichungsnummer: **0 159 577**
A2

# (12) EUROPÄISCHE PATENTANMELDUNG

(21) Anmeldenummer: 85103872.9

(22) Anmeldetag: 11.09.84

(51) Int. Cl.⁴: **B 60 H 1/00**, B 60 Q 3/04,
B 60 K 37/06

(30) Priorität: 14.03.84 DE 3409260
10.10.83 DE 3336828

(43) Veröffentlichungstag der Anmeldung: 30.10.85
Patentblatt 85/44

(84) Benannte Vertragsstaaten: **AT BE CH FR GB IT LI LU NL SE**

(60) Veröffentlichungsnummer der früheren Anmeldung nach Art. 76 EPÜ: 0137325

(71) Anmelder: **PREH, Elektrofeinmechanische Werke Jakob Preh Nachf. GmbH & Co., Postfach 1740 Schweinfurter Strasse 5, D-8740 Bad Neustadt/Saale (DE)**

(72) Erfinder: **Bauer, Karl-Heinz, Lerchenstrasse 9, D-8740 Bad Neustadt/Saale (DE)**
Erfinder: **Wolf, Reinhold, Hangweg 17, D-8740 Bad Neustadt/Saale (DE)**

(54) **Bedieneinheit.**

(57) Die Erfindung beschreibt eine Bedieneinheit zum Einstellen von Heizungs-, Klima- und/oder Lüftungsanlagen in Kraftfahrzeugen. In einem länglichen Grundkörper sind zwischen zwei Endstellungen Schiebeglieder geführt. Mit Hilfe dieser Schiebeglieder werden durch Übertragungsmittel Einstellelemente, wie z.B. Klappen oder Motoren, eingestellt. Als Übertragungsmittel ist ein Untersetzungsgetriebe in der Form von Zahnstangen und Zahnrädern vorgesehen. Mit dem Schiebeglied wird auch ein Gleitkörper bewegt, an dem nebeneinander zwei Farbbänder befestigt sind. Diese Farbbänder sind zwischen Lichtleitern durchgeführt, wobei die Lichtleiterenden so angeordnet sind, daß sich eine thermometerskalaähnliche Anzeige ergibt.

P r e h
Elektrofeinmechanische Werke
Jakob Preh, Nachf. GmbH & Co.
Schweinfurter Straße 5
8740 Bad Neustadt/Saale

0159577

, den 26.04.1984

Bsch/Hi
2/84 Pt.+Hgm
(Zusatz zu 1/84 Pt.+Hgm)

### Bedieneinheit

Die Erfindung geht von einer Bedieneinheit zum Einstellen von Heizungs-, Klima- und/oder Lüftungsanlagen in Kraftfahrzeugen nach dem Oberbegriff des Anspruches 1 aus.

Im Armaturenbrett von Kraftfahrzeugen untergebrachte Bedieneinheiten der gattungsgemäßen Art werden unter anderem z.B. zum unterschiedlich weiten Öffnen von Verteiler-Klappen von Auslässen für kühle oder warme Luft in vielfach als Klimaanlage bezeichneten Einrichtungen der Kraftfahrzeuge verwendet. Die Betätigung erfolgt hierbei meistens über Bowdenzüge. Es ist dabei oftmals erwünscht, die Stellung der Betätigungshandhabe auch im Dunkeln durch eine möglichst farbige Anzeige leicht erkennbar zu machen.

Eine beleuchtete Anzeige der jeweiligen Betriebsstellung der Schiebeglieder ist bei der Bedieneinheit gemäß der DE-AS 15 80 098 vorgesehen. Die Schiebeglieder sind in Schlitzen eines Grundkörpers geführt, wobei die aus anderen Schlitzen herausragenden Zapfen die Verstellbewegung der Schiebeglieder über ein Hebelgestänge auf Stellglieder, die ihrerseits die Bowdenzüge verstellen, übertragen. Auf der Vorderseite des Grundkörpers sind Lichtleisten angeordnet, die sich über den ganzen Verstellweg jedes einzelnen Schiebegliedes erstrecken. Von außen sind sie als Lichtband wahrzunehmen. Die Beleuchtung jeder Lichtleiste erfolgt über ein aus lichtdurchlässigem Kunststoff hergestellten Rahmenteil, das die Lichtstrahlen sammelt und an die Lichtleiter weiterleitet. Zur besseren Kenntlichmachung der Anfangs- und Endstellung des Schiebegliedes ist die Lichtleiste an der vorderen Stirnfläche keilförmig ausgebildet. Es kann auch eine farbige Beleuchtung vorgesehen sein. Es ist aus dieser Druckschrift jedoch nicht zu entnehmen, wie dies geschehen soll.

Eine andere Bedieneinheit mit beleuchteten Betätigungsknöpfen ist in der DE-OS 32 06 288 beschrieben. Es sind ein oder mehrere Schiebeglieder vorhanden, die in Schlitzen des Grundkörpers geführt sind. Über einen Zwischenhebel wird durch das Schiebeglied ein Stellhebel betätigt, an dem ein Bowdenzug befestigt ist. Die außen auf den Schiebegliedern angebrachten Betätigungsknöpfe sind mittels beweglicher Lichtleiter beleuchtet. Die Lichtleiter gehen von einer Beleuchtungsquelle aus und sie sind mitten durch das Schiebeglied zum Betätigungsknopf geführt.

Eine andere Bedieneinheit für Kraftfahrzeuge, bei der die Betätigungsknöpfe der Schiebeglieder beleuchtet sind, ist aus dem DE-GM 76 34 978 bekannt. Die Schiebeglieder sind in Schlitzen des Grundkörpers geführt. Das für die Beleuchtung der Betätigungsknöpfe erforderliche Licht gelangt über Lichtträgerarme bzw. Lichtleiter von einer zentralen Lichtquelle aus nach Lichtumlenkungen zu den Betätigungsknöpfen. An den Übergangsflächen des Lichtes sind die Lichtleiter geriffelt, so daß eine Streufläche entsteht. Die zentrale Lichtquelle ist in die Öffnung eines Blockes eingesetzt, von dem aus die Lichtleiter ausgehen. Als Lichtquelle dient eine Lumineszenzdiode, die sowohl weißes als auch farbiges Licht aussenden kann.

Ein Lichtleitstab zum farbigen Ausleuchten von Instrumenten in Kraftfahrzeugen ist in dem DE-GM 80 04 562 beschrieben. Auf die Reflexionsfläche des Lichtleitstabes ist eine Farbschicht von 30 µm Dicke aufgetragen. Über dieser Farbschicht befindet sich eine zweite weiße Schicht. Für jede Farbe wird ein eigener Lichtleitstab benötigt. Mit dieser vorgeschlagenen Lösung ist es nicht möglich, mit dem gleichen Lichtleitstab nacheinander zwei verschiedene Farbflächen zu erzeugen.

Eine Leuchtbandanzeigeanordnung mit einer thermometerskalaähnlichen Anzeige ist auch in der DE-OS 33 17 807 beschrieben. Hierbei wird die Stellung der Betätigungshandhabe mittels in einer Reihe angeordneter Leuchtsegmente, die von den Enden von Lichtleitern gebildet werden, sichtbar gemacht. Die Lichtleiter

0159577

gehen sternförmig von einem Leuchtzentrum aus. In diesem Leuchtzentrum ist eine Lichtquelle angeordnet. Zwischen Lichtquelle und Lichtleitereintrittsstellen sind Farbbänder geführt, deren Länge über die gesamte Skalaerstreckung hinausgeht. Damit ist es möglich, die gesamte Skala in nur einer Farbe zu beleuchten. Damit die Farbbänder sich nicht überlappen und sich eine Farbverfälschung ergibt, ist eine Austrittsöffnung für die Farbbänder im Leuchtzentrum vorgesehen. Eine angeformte, etwas in den Raum ragende Führung gewährleistet, daß kein Verkanten der Farbbänder vorkommt. Die Farbbänder und damit die Führungen sind entsprechend der Länge des Schiebeweges der Betätigungshandhabe oder entsprechend der Umdrehung des Drehknopfes relativ lang.

Aufgabe der vorliegenden Erfindung ist es, eine Bedieneinheit nach der eingangs genannten Art zu schaffen, die eine konstruktiv einfache, eigens nur für Schiebeglieder geeignete Anzeigeeinrichtung aufweist, bei der die einzelnen reibungslos geführten Farbbänder kürzer als der Schiebeweg der Schiebeglieder sind und bei der die Gefahr des Überlappens der Farbbänder und damit eine Farbverfälschung beseitigt ist.

Diese Aufgabe wird erfindungsgemäß durch die im Kennzeichnungsteil des Anspruches 1 angegebenen Merkmale gelöst.

Vorteilhafte Ausgestaltungen ergeben sich aus den Unteransprüchen.

Die Erfindung wird nachfolgend für ein Ausführungsbeispiel anhand der Zeichnungen näher beschrieben.

Von den Figuren zeigt

Figur 1    eine perspektivische Vorderansicht einer Bedieneinheit in Explosionsdarstellung,

Figur 2    in Perspektivansicht im vergrößerten Maßstab teilweise aufgebrochen einen Teilausschnitt der Bedieneinheit,

0159577

Figur 3  eine perspektivische Ansicht des Schiebegliedes mit
Bremsfeder,

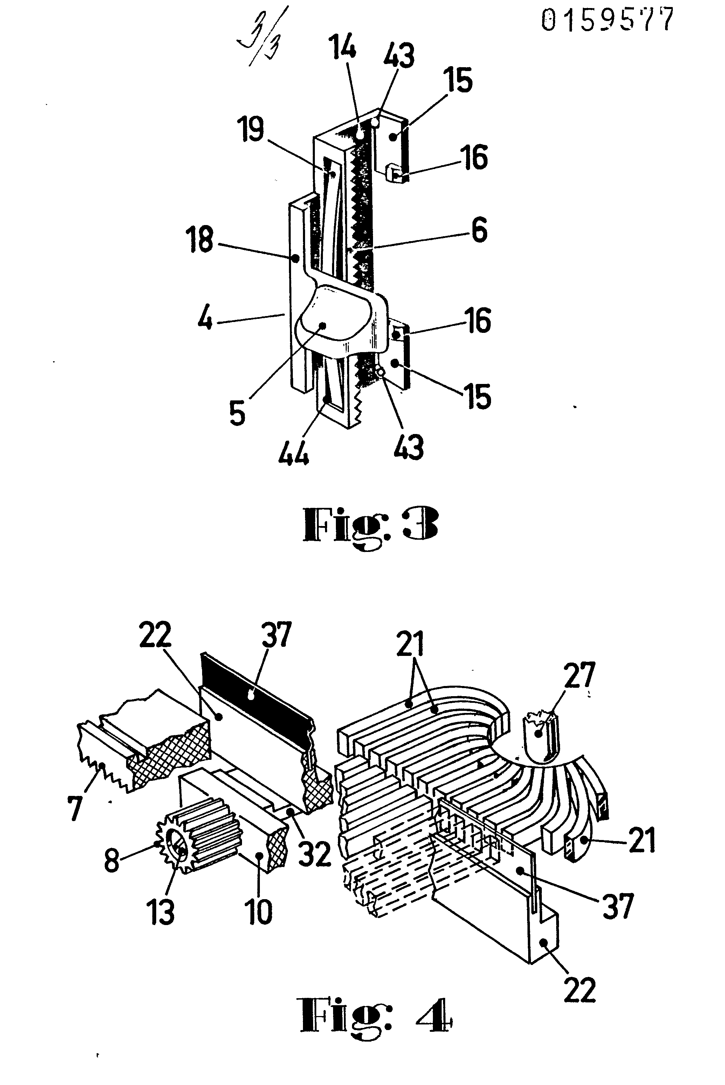

Figur 4  eine perspektivische Ansicht eines rückwärtigen,
schematisierten Teilausschnittes der Bedieneinheit.

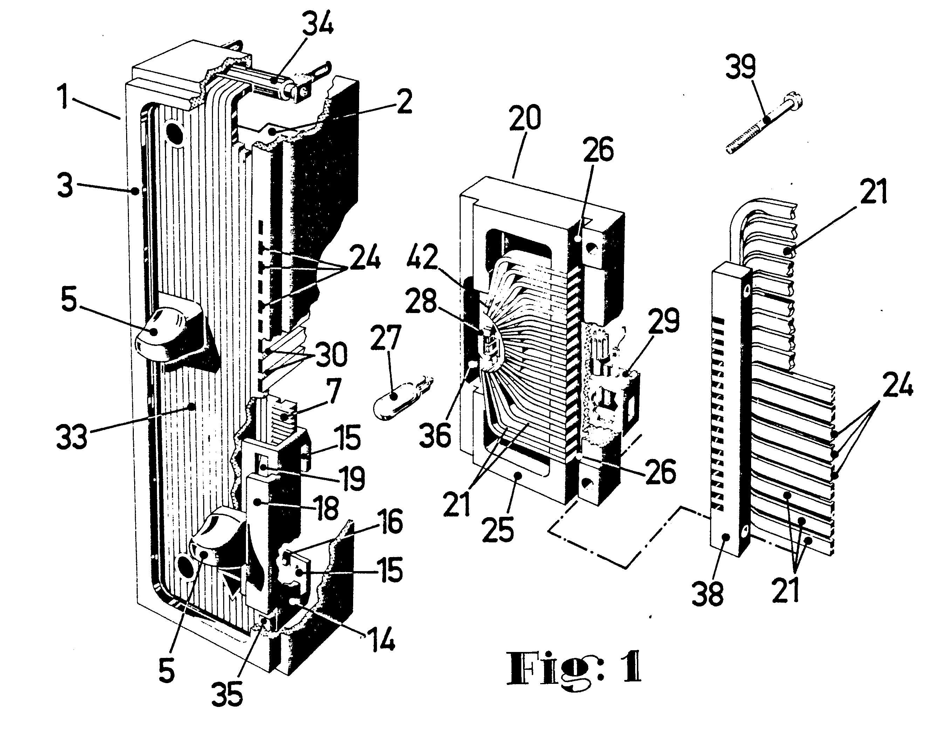

In Figur 1 ist in perspektivischer Darstellung eine Bedieneinheit gezeigt, wie sie z.B. zum Einstellen von Heizungs-,
Klima- und/oder Lüftungsanlagen in Kraftfahrzeugen verwendet
werden kann. Das hier dargestellte Ausführungsbeispiel besitzt zwei Schiebeglieder. Mit Hilfe dieser Schiebeglieder
werden meist unmittelbar Einstellelemente betätigt. Bei den
Einstellelementen kann es sich um mechanische, wie z.B.
Klappen, oder elektrische Bauelemente, wie z.B. Motoren,
handeln. Während die mittelbare Betätigung der mechanischen
Einstellelemente über Zahnstangen, Seiltriebe, Bowdenzüge
usw. erfolgt, wird die mittelbare Betätigung der elektrischen
Einstellelemente z.B. über Potentiometer oder Schalter vorgenommen, die durch einen Schieber betätigt werden. Die Höhe
der abgegriffenen Spannung ist ein Maß für den Grad der Einstellung.

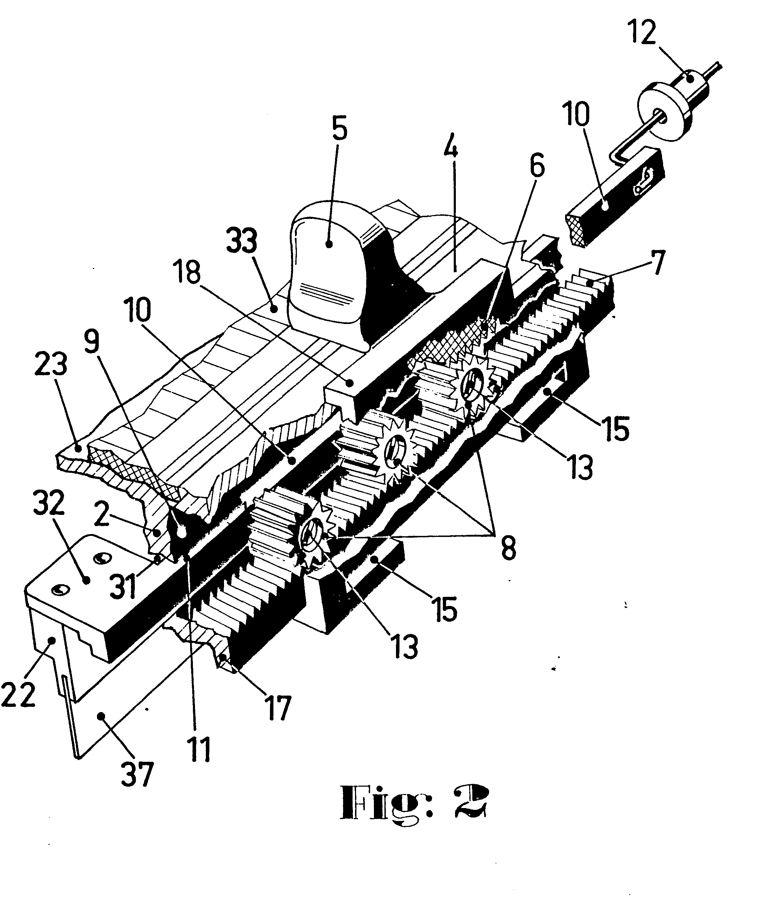

In Figur 1 ist mit 2 ein länglicher, im Querschnitt U-förmiger
Grundkörper aus Kunststoff bezeichnet, dessen verstärkte
Seitenwandungen, wie am besten aus Figur 2 zu erkennen ist,
je eine längliche Aussparung 9 aufweisen. In jeder Aussparung
9 ist das Untersetzungsgetriebe eines Schiebegliedes 4 untergebracht, das entlang des Grundkörpers zwischen zwei Endstellungen bewegbar ist. Begrenzt ist der Schiebeweg des
Schiebegliedes 4 durch einen an den Grundkörper angeformten
Vorsprung 35 als Anschlag. Zweckmäßigerweise sind an beiden
Enden des Schiebeweges Vorsprünge vorgesehen.

Wie aus Figur 3 zu entnehmen ist, besteht das Schiebeglied 4
aus einem U-förmigen Schlitten mit einer Schlittenbasis 14.
Auf der einen Seite der Schlittenbasis sind zu ihr in einem
rechten Winkel zwei Halteglieder 15 angeformt, die an der
Stirnseite der Schlittenbasis über eine schmale Brücke 43 mit ihr einstückig verbunden sind. Durch diese Art Verbindung sind die Halteglieder federnd ausgebildet. Dies ist deshalb von Bedeutung, da am freien Ende jedes Haltegliedes eine Nase 16 vorhanden ist. Diese Nasen dienen nach dem Einschnappen zur Halterung und Führung des Schiebegliedes am Grundkörper. Die Führung erfolgt hierbei so, daß die Nasen 16 einen Steg 17 hintergreifen, der auf der Unterseite bzw. Rückseite des Grundkörpers 2 randseitig verläuft.

Auf der anderen Seite der Schlittenbasis wird, wie Figur 3 zeigt, der im rechten Winkel stehende Schenkel von einer ersten Zahnstange gebildet, die eine Innenverzahnung aufweist. Auf der Außenseite der ersten Zahnstange 6 ist eine Bremsfeder 19 in eine Einsenkung 44 eingesetzt. Diese Bremsfeder stützt sich unter Vorspannung zum einen an einer Wand der Aussparung 9 im Grundkörper 2 und zum anderen an dem Schiebeglied 4 selbst ab. Mit der Vorspannung kann der gewünschte Schiebegang des Schiebegliedes in bestimmten Grenzen vorgewählt werden.

In Verlängerung der Schlittenbasis 14 ist mit ihr fluchtend ein Winkelstück 18 angeformt, das am abgewinkelten, freien Ende eine Betätigungshandhabe 5 trägt. Die Betätigungshandhabe 5 ist gegenüber der Schlittenbasis 14 und damit gegenüber dem in der gleichen Ebene wie die Schlittenbasis liegenden und dem zwischen Grundkörper 2 und Blendrahmen 3 gebildeten Schlitz hindurchragenden Teil des Winkelstücks 18 seitlich versetzt, so daß eine Art Labyrinthdichtung entsteht. Damit wird ein gewisser Schutz des Inneren vor Verschmutzung erreicht. Außerdem ist ein weiterer sowohl mechanischer als auch elektrischer Schutz dadurch gegeben, daß man nicht mit einem schmalen Gegenstand durch den Schlitz in das Innere gelangen kann. Ferner werden die Motorgeräusche gedämpft oder, falls man die Rückseite der Bedieneinheit mit einem Deckel verschließt, stark herabgesetzt.

In der seitlichen Aussparung 9 des Grundkörpers befindet sich ein Linearantrieb mit einem Untersetzungsgetriebe. Dieses besteht unter anderem aus der ersten Zahnstange 6 des Schiebegliedes 4 und einer zweiten Zahnstange 7, die, wie Figur 2 zeigt, an der unteren Wand der Aussparung 9 am Grundkörper

0159577

ausgebildet ist. Zwischen beiden Zahnstangen sind bei dem in den Figuren dargestellten Ausführungsbeispiel drei Zahnräder 8 drehbar gelagert. Selbstverständlich sind auch Ausführungsbeispiele denkbar, bei denen mehr Zahnräder vorhanden sind.

Jedes Zahnrad 8 ist an einem Zapfen 13 befestigt, jedoch so, daß es sich drehen kann. Die Zapfen ihrerseits sind an einer Stange 10 angespritzt, die in einer Nut 11 am Boden der Aussparung 9 geführt ist. Wie in Figur 2 veranschaulicht, stehen die Zapfen 13 senkrecht zur Schieberichtung der Stange 10.

Wird nun das Schiebeglied bewegt, so drehen sich die Zahnräder 8, deren Zähne sowohl mit den Zähnen der ersten Zahnstange 6 als auch mit den Zähnen der zweiten Zahnstange 7 in Eingriff stehen. Mit den Zahnrädern bewegt sich auch die Stange 10. Der Schiebeweg der Stange ist durch dieses Untersetzungsgetriebe halb so groß wie der Schiebeweg des Schiebegliedes. Aus diesem Grunde auch ist die erste Zahnstange 6 etwa länger als die Hälfte des Schiebeweges des Schiebegliedes 4. Es ist zweckmäßig, wenigstens drei Zahnräder zu verwenden, um einen sicheren Schiebegang zu erreichen. Am Anfang und am Ende des Schiebeweges des Schiebegliedes in der Nähe der Anschläge stehen nämlich nur jeweils zwei Zahnräder mit beiden Zahnstangen in Eingriff. In der Mitte des Schiebeweges des Schiebegliedes läuft die erste Zahnstange 6 über alle drei Zahnräder.

Mit jeder Stange 10 kann ein Bowdenzug verbunden sein. Mit Hilfe dieses Bowdenzuges können in den Figuren nicht dargestellte mechanische Einstellelemente verstellt werden. Neben dieser mechanischen Übertragung der Kraft kann auch eine elektrische Verbindung vorgesehen sein. Ein derartiges Ausführungsbeispiel ist in den Figuren jedoch nicht dargestellt. Die Stange könnte z.B. direkt mit dem Schieber eines Schiebepotentiometers verbunden sein. Die von der Kontaktfeder abgegriffene Spannung wird über eine elektrische Verbindung in der Form einer Leiterplatte oder eines Kabels direkt oder nach Umwandlung zu einem Einstellelement geführt, das entsprechend der Höhe dieser Spannung verstellt wird.

Das in Figur 1 dargestellte Ausführungsbeispiel besitzt zwei Schiebe-Einstellmöglichkeiten, wobei der Grundkörper 2 durch einen Blendrahmen 3 seitlich und am Rand, wo sich der Schlitz für das Schiebeglied befindet, abgedeckt ist. Sind mehr als zwei Schiebe-Einstellmöglichkeiten gefordert, so können auch mehrere Grundkörper aneinandergereiht werden und durch einen gemeinsamen Blendrahmen abgedeckt werden, jedoch immer so, daß der vorhandene Schlitz von einem Blendrahmensteg abgedeckt und geschützt ist.

In der Nut 11 am Boden der Aussparung ist ein sich in Schieberichtung erstreckender Schlitz 31 ausgespart. In diesen Schlitz 31 ragt ein Mitnehmer 32, der an die Stange 10 angeformt ist. Dieser Mitnehmer 32 befindet sich auf der dem Zapfen 13 gegenüberliegenden Seite der Stange. Mit dem Mitnehmer 32 verbunden ist ein länglicher Gleitkörper 22, in dessen Ritze zwei Farbbänder 37 nebeneinander eingeklemmt sind. Anstelle von Farbbändern könnte man auch steife Farbscheiben verwenden. Dient z.B. ein Schiebeglied zum Einstellen von Warm/Kalt, so wird man zweckmäßigerweise eine blau/rot-Farbanzeige verwenden. Das heißt, daß ein Farbband blau und eines rot eingefärbt ist. Die Farbanzeige bzw. die Länge jedes Farbbandes ist so gewählt, daß in den Endstellungen des Schiebegliedes die im Blendrahmen 3 sichtbaren Lichtleiterenden 24 entweder nur rot oder nur blau aufleuchten.

Auf der Rückseite des U-förmigen Grundkörpers 2 ist ein Leuchtzentrum 20 angeordnet. Es besteht unter anderem aus einem etwa rechteckförmigen Fassungskörper 25, der aus Kunststoff oder Metall hergestellt ist. Auf der dem Grundkörper zugekehrten Unterseite ist eine halbrundförmige Senke 36 ausgespart. In die Höhlung dieser Senke 36 ragt die Lichtquelle 27, die in einer Lampenfassung 28 gehalten wird. Diese Lampenfassung kann entweder an den Fassungskörper 25 einstückig angeformt oder als gesonderte Lampenfassung 28 in den Fassungskörper 25 eingesetzt sein. Der Rand der Senke weist viele halbrundförmig angeordnete, radial laufende Einschnitte 42 auf. In diese Einschnitte eingeklemmt sind die Lichtleiter 21. Der Querschnitt jedes Lichtleiters ist rechteckförmig mit Breit- und Längsseiten. Die Lichtleiter sind so nebeneinander angeordnet, daß sie mit ihren Längsseiten dicht aneinander liegen. Damit können sie in optimaler Weise ein Maximum an Licht aufnehmen.

Alle Lichtleiter sind, wie Figur 1 zeigt, zu einer Unterbrechungslücke 26 geführt, die sich als durchgehende Furche im Fassungskörper 25 darstellt. An einem Furchenrand enden die ankommenden Lichtleiter. Das durch sie mitgeführte Licht tritt aus und überquert die Furche, um im gegenüberliegenden Furchenrand in die abgehenden Lichtleiter einzutreten. In diese furchenartige Unterbrechungslücke 26 ragen nun die Farbbänder 37. Dabei ist die Länge jedes Farbbandes so gewählt, daß es etwas größer ist als die Gesamtstrecke der nebeneinander liegenden Lichtleiter. Damit ist gewährleistet, daß am Endanschlag alle Lichtleiter nur in einer Farbe leuchten.

Der Furchenrand für die abgehenden Lichtleiter wird durch eine Leiste 38 gebildet, in der die Lichtleiter gehaltert sind. Mittels Schrauben 39 ist der Fassungskörper 25 und die Leiste 38 am Grundkörper 2 befestigt.

Wie aus dem rechten Teil der Figur 1 zu entnehmen ist, sind die abgehenden, aus der Leiste herausgeführten Lichtleiter abstandsmäßig aufgeweitet, etwa in einem Winkel von 90° abgebogen und gleichzeitig in sich gedreht, so daß die Lichtleiterenden 24 mit ihren Breitseiten nebeneinander liegen. Dabei sind natürlich die Drehungen der Lichtleiter in Abhängigkeit von ihrer Position in der Reihe verschieden. Durch die Aufweitung und die Anordnung der nebeneinander liegenden Breitseiten kann man eine thermometerskalaähnliche Anzeige erreichen, deren Erstreckung dem Schiebeweg des Schiebegliedes entspricht. Man erzielt somit auf einfache Weise eine Übersetzung Farbbandlänge/Anzeigelänge im gleichen Verhältnis wie die Untersetzung Schiebeglied/Stangenweg bzw. Gleitkörperweg.

Wie aus Figur 1 zu entnehmen ist, sind die Lichtleiterenden 24 in Spalten 30 auf einer Längsseite des Blendrahmens 3 als thermometerskalaähnliche Anzeige sichtbar. Selbstverständlich könnte eine derartige Anzeige auch auf der anderen Längsseite in den gleichen Farben oder auch in anderen Farben vorgesehen sein. Man würde hierfür lediglich ein weiteres Leuchtzentrum für das andere Schiebeglied benötigen.

Auf der Rückseite des Fassungskörpers 25 ist eine Steckbuchse 29 vorgesehen, mittels der die entsprechende Spannung für die Lichtquelle 27 herangeführt werden kann. Diese Steckbuchse kann entweder als Einzelteil an dem Fassungskörper befestigt werden oder sie kann einstückig mit angeformt sein.

Neben der thermometerskalaähnlichen Anzeige ist es oftmals erwünscht, die ganze Frontseite in einem meist weißen Licht zu erhellen. Zu diesem Zweck ist auf der Frontseite des Grundkörpers 2 eine Vertiefung 23 vorgesehen, die einen Lichtleitkörper 33 aufnimmt. Damit ist ein besserer Schutz des Lichtleitkörpers gegeben. Außerdem kann der Lichtleitkörper im Bedarfsfall mit einer durchsichtigen Folie abgedeckt werden, die mit einer Beschriftung und/oder mit Symbolzeichen versehen ist. Der Lichtleitkörper kann aus eng nebeneinanderliegenden Einzellichtleitern oder einem großen Einzelstück bestehen. Für die flächige Ausleuchtung kann man zwischen zwei Ausführungsmöglichkeiten wählen. Man bringt auf der Unterseite des Lichtleitkörpers entweder Erhebungen oder Einschnitte an, an denen das Licht abgelenkt und zu der glatten Oberfläche geführt wird. Das Licht erhält der Lichtleitkörper von einer Lichtquelle 34, die z.B. als Sofitte ausgebildet, sich -wie Figur 1 zeigt- an einer Breitseite des Grundkörpers befindet.

## Bezugszeichenliste

| | | | |
|---|---|---|---|
| 1 | Bedieneinheit | 36 | Senke |
| 2 | Grundkörper | 37 | Farbband |
| 3 | Blendrahmen | 38 | Leiste |
| 4 | Schiebeglied | 39 | Schraube |
| 5 | Betätigungshandhabe | 42 | Einschnitt |
| 6 | erste Zahnstange | 43 | Brücke |
| 7 | zweite Zahnstange | 44 | Einsenkung |
| 8 | Zahnrad | | |
| 9 | Aussparung | | |
| 10 | Stange | | |
| 11 | Nut | | |
| 12 | Bowdenzug | | |
| 13 | Zapfen | | |
| 14 | Schlittenbasis | | |
| 15 | Halteglied | | |
| 16 | Nasen | | |
| 17 | Steg | | |
| 18 | Winkelstück | | |
| 19 | Bremsfeder | | |
| 20 | Leuchtzentrum | | |
| 21 | Lichtleiter | | |
| 22 | Gleitkörper | | |
| 23 | Vertiefung | | |
| 24 | Lichtleiterende | | |
| 25 | Fassungskörper | | |
| 26 | Unterbrechungslücke | | |
| 27 | Lichtquelle | | |
| 28 | Lampenfassung | | |
| 29 | Steckbuchse | | |
| 30 | Spalte | | |
| 31 | Schlitz | | |
| 32 | Mitnehmer | | |
| 33 | Lichtleitkörper | | |
| 34 | Lichtquelle | | |
| 35 | Vorsprung | | |

Preh
Elektrofeinmechanische Werke
Jakob Preh, Nachf. GmbH & Co.
Schweinfurter Straße 5
8740 Bad Neustadt/Saale                    , den 26.04.1984

Bsch/Hi
2/84 Pt.+Hgm
(Zusatz zu 1/84 Pt.+Hgm)

0159577

## Bedieneinheit

1. Bedieneinheit (1), insbesondere zum Einstellen von Heizungs-, Klima- und/oder Lüftungsanlagen in Kraftfahrzeugen, mit mindestens einem in einem länglichen Grundkörper (2) zwischen zwei Endstellungen verschiebbar geführten Schiebeglied (4), dessen Betätigungshandhabe (5) aus dem Grundkörper (2) herausragt und das mit Hilfe von Übertragungsmitteln auf Einstellelemente einwirkt, wobei die Übertragungsmittel aus einem Untersetzungsgetriebe bestehen mit einer an das Schiebeglied (4) angeformten, ortsveränderbaren ersten Zahnstange (6) und mit einer an den Grundkörper (2) angeformten, ortsfesten zweiten Zahnstange (7), wobei zwischen beiden Zahnstangen mindestens ein mit den beiden Zahnstangen in Wirkverbindung stehendes Zahnrad (8) dreh- und verschiebbar gelagert ist, das mit einem auf das Einstellelement mittel- oder unmittelbar einwirkenden Verstellmittel verbunden ist nach Patent ............. (Patentanmeldung P 34 09 260.9),
dadurch gekennzeichnet,
daß mit dem Verstellmittel ein länglicher, verschiebbarer Gleitkörper (22) verbunden ist, an dem in Schieberichtung mindestens zwei nebeneinander angeordnete Farbbänder (37) oder Farbscheiben befestigt sind, die in Unterbrechungslücken (26) von Lichtleitern (21) hineinragen, wobei die Lichtleiter (21) von einem an dem Grundkörper (2) auf dessen Rückseite angeordneten Leuchtzentrum (20) ausgehen und zur Frontseite des Grundkörpers (2) geführt sind, so daß die Lichtleiterenden (24) nebeneinanderliegend eine thermometerskalaähnliche Anzeige ergeben.

2. Bedieneinheit nach Anspruch 1,
   dadurch gekennzeichnet,
   daß das Leuchtzentrum (20) ein Fassungskörper (25) ist, in
   dem stern- oder halbkreisförmig angeordnet die Lichtleiter
   (21) gehaltert sind.

3. Bedieneinheit nach Anspruch 2,
   dadurch gekennzeichnet,
   daß am Fassungskörper (25) die Lampenfassung (28) befestigt
   oder mit angeformt ist.

4. Bedieneinheit nach Anspruch 2,
   dadurch gekennzeichnet,
   daß am Fassungskörper (25) eine Steckbuchse (29) befestigt
   oder mit angeformt ist.

5. Bedieneinheit nach Anspruch 1,
   dadurch gekennzeichnet,
   daß die Lichtleiter (21) im Querschnitt rechteckig sind,
   mit einem Längen/Breitenverhältnis größer eins, wobei die
   Lichtleiter an dem lichtquellenseitigen Ende mit ihren
   Längsseiten und an dem frontseitigen Ende mit ihren Breitseiten nebeneinanderliegend angeordnet sind.

6. Bedieneinheit nach Anspruch 1,
   dadurch gekennzeichnet,
   daß der Grundkörper (2) in einem Blendrahmen (3) einsetzbar ist.

7. Bedieneinheit nach einem der Ansprüche 1 bis 6,
   dadurch gekennzeichnet,
   daß die frontseitigen Lichtleiterenden (24) in Spalten (30)
   des Blendrahmens (3) sichtbar sind.

8. Bedieneinheit nach einem der Ansprüche 1 bis 7,
   dadurch gekennzeichnet,
   daß das Verstellmittel eine in einer Nut (11) im Boden einer
   seitlichen Aussparung (9) des Grundkörpers (2) geführten
   Stange (10) ist, deren senkrecht zur Schieberichtung an die Stange (10) angeformter und einen Schlitz (31) in der Nut
(11) durchsetzender Mitnehmer (32) mit dem Gleitkörper
(22) verbunden ist.

**Fig: 1**

**Fig. 2**

0159577

Fig. 3

Fig. 4